**Europäisches Patentamt**

**European Patent Office**

**Office européen des brevets**

(19)

(11) Numéro de publication: **0 174 227**
**B1**

# (12) FASCICULE DE BREVET EUROPÉEN

(45) Date de publication du fascicule du brevet:
08.03.89

(51) Int. Cl.⁴: **G 01 D 5/20**

(21) Numéro de dépôt: 85401553.4

(22) Date de dépôt: 30.07.85

(54) **Capteur de déplacements sans contacts.**

(30) Priorité: 07.08.84 FR 8412820

(43) Date de publication de la demande:
12.03.86 Bulletin 86/11

(45) Mention de la délivrance du brevet:
08.03.89 Bulletin 89/10

(84) Etats contractants désignés:
DE GB IT

(56) Documents cité:
EP-A-0 128 824
GB-A-883 596
GB-A-883 781
GB-A-2 021 770
US-A-3 140 475
US-A-4 244 108

(73) Titulaire: AUTOMOBILES PEUGEOT, 75, avenue de
la Grande Armée, F-75116 Paris (FR)
Titulaire: AUTOMOBILES CITROEN, 62 Boulevard
Victor- Hugo, F-92200 Neuilly- sur- Seine (FR)

(72) Inventeur: Ducrot, Pol Baptiste Louis, 49, rue de
Villeneuve, F-92380 Garches (FR)
Inventeur: Dequenne, Michel Paul, 10, rue Belle-
Epine, F-78650 Beynes (FR)

(74) Mandataire: Boivin, Claude, 9, rue Edouard-
Charton, F-78000 Versailles (FR)

EP 0 174 227 B1

LIBER, STOCKHOLM 1989

## Description

La présente invention concerne les capteurs de déplacement inductifs comprenant un transformateur à couplage variable qui est alimenté en courant périodique et comporte deux enroulements primaire et secondaire disposés côte-à-côte et un noyau disposé dans ces enroulements.

Le plus souvent, ces capteurs inductifs qui peuvent être utilisés notamment dans le domaine de l'électronique automobile, comportent un transformateur différentiel présentant deux enroulements secondaires disposés de part et d'autre de l'enroulement primaire, de sorte que, lorsque le noyau sort de l'un des enroulements secondaires, il pénètre dans l'autre d'une longueur égale.

C'est ainsi que le document US-A-3-140 475 décrit un capteur de déplacement inductif comportant un transformateur à couplage variable qui est alimenté en courant périodique et comporte deux enroulements dont un primaire et un secondaire disposés côte-à-côte et un noyau disposé dans ces enroulements, l'enroulement primaire ayant plusieurs couches et étant traversé en permanence par le noyau, un tube culasse formant blindage enveloppant l'ensemble des deux bobinages.

De son côté le document GB-A-2 021 770 décrit un capteur comportant un transformateur à couplage variable dont le primaire est alimenté par un signal carré et dont la longueur est inférieure au diamètre moyen de l'enroulement. Dans ce capteur le signal de sortie est redressé par un amplificateur opérationnel.

Mais ces capteurs à transformateur différentiel ont un encombrement important et un prix de revient élevé, et sont difficilement adaptables à des systèmes numériques.

La présente invention a pour objet un capteur de déplacement inductif qui remédie à ces inconvénients.

Le capteur selon l'invention est caractérisé en ce que l'enroulement primaire a une longeur inférieur au diamètre moyen de l'enroulement, en ce que l'enroulement secondaire ne comporte qu'une seule couche de spires et a une longueur au moins égale à la course possible du noyau, en ce que la tension d'alimentation de l'enroulement primaire a une forme approximativement rectangulaire et une fréquence supérieure à 10 kHz, en ce que l'enroulement primaire et l'enroulement secondaire sont connectés à un circuit d'interface comprenant des moyens pour élaborer un signal rectangulaire alimentant l'enroulement primaire et, pour redresser le signal prélevé sur l'enroulement secondaire, un interrupteur bidirectionnel, par exemple de technologie CMOS, dont la commande est effectuée en synchronisme avec l'alimentation du bobinage primaire, dont l'électrode d'entrée est reliée au secondaire du capteur éventuellement par l'intermédiaire d'un circuit de protection contre les tensions négatives, et dont l'électrode de sortie est reliée à un condensateur mémoire dont la tension est lue par un amplificateur de courant continu à grande impédance d'entrée, et des moyens de régulation comprenant des moyens de prélèvement de la composante alternative du signal primaire, des moyens de mémorisation de cette composante par charge d'un condensateur à une première tension continue proportionnelle, des moyens de comparaison avec une deuxième tension continue de référence et des moyens d'amplification de l'écart entre les deux tensions pour fournir une contre réaction efficace.

Le document US-A-4 244 108 décrit par ailleurs un dispositif comportant un interrupteur bidirectionnel relié au secondaire du capteur, un transistor ballast sur un circuit de réglage, des amplificateurs opérationnels utilisés dans le circuit de réglage, des moyens pour prélever un signal dérivé du signal primaire et des moyens de comparaison dudit signal dérivé avec une tension continue de référence et des moyens d'amplification de l'écart entre les deux signaux comparés pour fournir une contre réaction efficace. Mais il s'agit en fait de l'alimentation d'un transformateur à rapport de transformation fixe, alimentant directement un ou plusieurs capteurs. Il comporte un enrouleur de réaction intervenant sur la génération des signaux alternatifs d'alimentation, un secondaire à point milieu utilisé pour piloter la régulation, ce qui est totalement différent du capteur selon l'invention.

D'autres modes de réalisation sont définis dans les revendications 2 à 7.

On a décrit ci-après, à titre d'exemples non limitatifs, les modes de réalisation du capteur selon l'invention, avec référence aux dessins annexés dans lesquels:

La Figure 1 est une vue en coupe axiale d'un premier mode de réalisation du capteur;

La Figure 2 est une vue en coupe transversale de la culasse;

La Figure 3 est une vue en coupe axiale d'un second mode de réalisation du capteur;

La Figure 4 en est une vue en coupe transversale suivant IV - IV de la Figure 3;

La Figure 5 représente le circuit d'interface associé au capteur dans le cas où le redressement sans seuil est effectué en mode unidirectionnel;

La Figure 6 représente ce même circuit équipé d'une variante de redresseur sans seuil en mode bidirectionnel plus avantageux;

La Figure 7 représente la variation de la tension de sortie de l'interface associée au capteur en fonction du déplacement du noyau.

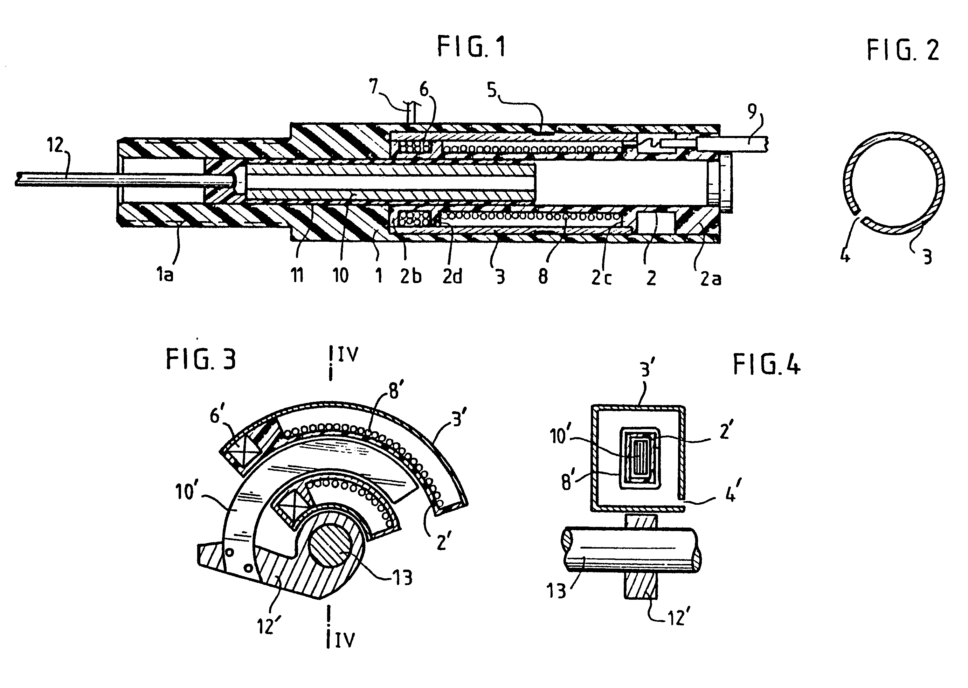

Tel qu'il est représenté aux Figures 1 et 2, le capteur de éplacement comprend un fourreau rectiligne 1, en matière plastique, dont l'une des extrémités est filetée, comme indiqué en la, de façon à pouvoir assurer sa fixation sur un support. Dans l'autre extrémité du fourreau est emmanché un noyau central creux 2 également en matière plastique. Ce noyau comporte une portée de guidage 2a ainsi que des épaulements annulaires 2b et 2c lesquels est disposée une culasse 3 en un matériau ferro-magnétique. Celle-ci peut, par exemple, être en tôle et être munie d'une fente longitudinale 4; elle peut également être constituée par une tôle mince enroulée, chaque spire étant isolée pour éviter les courts-circuits. La culasse 3 est entourée dans sa partie centrale par une culasse secondaire 5.

Un enroulement primaire 6 à couches multiples et relativement compact est bobiné sur le noyau 2 entre son épaulement 2b et un épaulement intermédiaire 2d, et relié à des conducteurs 7. Un enroulement secondaire 8, formé d'une couche de spires, est bobiné sur le noyau, entre les épaulements 2b et 2c, et relié à des conducteurs 9.

A l'intérieur du noyau 2 est monté coulissant un noyau magnétique 10 revêtu d'un enrobage 11 et relié à un cable de commande 12. Ce noyau peut être, par exemple, en ferrite douce, en un alliage magnétique feuilleté, ou bien formé d'un ou plusieurs tubes concentriques en fer ou en acier doux, de préférence fendus et mutuellement isolés. Le noyau 10 s'étend constamment en regard de l'enroulement primaire 6 alors que, suivant sa position, il s'étend plus ou moins à l'intérieur de l'enroulement secondaire 8. La longueur de ce dernier enroulement est au moins égale à la course possible du noyau 10 et la longueur du noyau est au moins égale à la somme des longueurs de l'enroulement secondaire 8.

En fonctionnement, le couplage entre l'enroulement secondaire 8 et l'enroulement primaire 6 dépend de la position du noyau 10. On recueille donc en 9 une tension dont la valeur dépend de la position du noyau c'est-à-dire de la pièce qui est liée à ce noyau par l'intermédiaire du câble 12. Les culasses 3 et 5 assurent la fermeture du flux et protègent le capteur des perturbations éventuelles dues au champ magnétique extérieur ou à la proximité immédiate de pièces ferro-magnétiques.

Le capteur de déplacement représenté aux Figures 3 et 4 est identique dans son principe à celui des Figures 1 et 2, mais sert à détecter un mouvement angulaire. Le noyau magnétique 10' a une forme en arc de cercle et est fixé sur une patte 12' calée sur un arbre 13. Le noyau en matière plastique 2', les enroulements 6' et 8' ainsi que la culasse 3' constituent des surfaces toroïdales coaxiales à l'arbre 13.

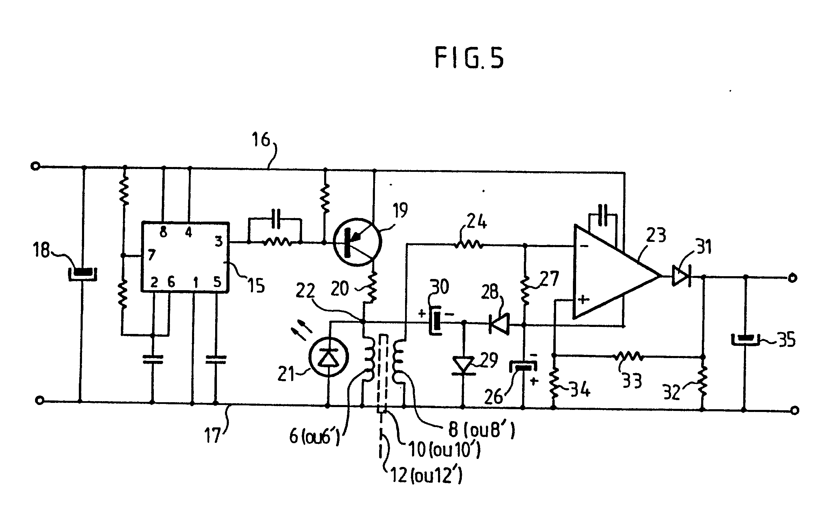

La Figure 5 montre l'alimentation du capteur. Cette alimentation comporte un générateur de signaux carrés ayant une fréquence supérieure à 10 kHz et inférieure à 150 kHz. Ce générateur comporte un circuit intégré 15 qui est par exemple un 555 et est monté de la façon usuelle; il est connecté à une ligne de tension continue positive 16 et à une ligne de tension négative 17, l'alimentation étant filtrée par un condensateur 18. Le signal carré obtenu à la borne 3 du circuit 15 commande un transistor de puissance 19 dont le collecteur est relié par une résistance 20 à l'une des bornes de l'enroulement primaire 6 ou 6', l'autre borne de cet enroulement étant connectée à la ligne 17. Une diode électro-luminescente 21 est connectée par sa cathode au point de connection 22 de la résistance 20 et de l'enroulement 6 ou 6', et par son anode à la ligne 17. Cette diode fonctionne comme "diode de roue libre" et par sa chute de tension directe permet d'établir un signal relativement symétrique sur le primaire 6 ou 6' du capteur.

L'enroulement secondaire 8 ou 8' du capteur a ses bornes connectées respectivement à la ligne 17 et à l'entrée "inverseuse" d'un amplificateur opérationnel 23 par l'intermédiaire d'une résistance 24.

L'amplificateur opérationnel est alimenté à partir de la ligne positive 16 et d'un circuit comprenant un condensateur 26 connecté à la ligne 17, une résistance 27 connectée à l'entrée "inverseuse" l'amplificateur et une diode 28; celle-ci est elle- même connectée par une diode 29 à la ligne 17 et au point 22 par l'intermédiaire d'un condensateur 30, les diodes 28 et 29 étant passantes dans le sens diode 28, diode 29 et ligne 17. Ce circuit constitue une alimentation négative par rapport à la ligne 17, qui permet d'alimenter un amplificateur opérationnel suffisamment rapide sans avoir recours à une source extérieure négative.

Le courant de sortie de l'amplificateur 23 traverse une diode 31 dont la sortie est reliée à la ligne 17 par une résistance 32, ainsi qu'à une résistance 33; cette dernière est par ailleurs connectée à l'entrée "non inverseuse" de l'amplificateur opérationnel et, par une résistance 34 à la ligne 17. Le courant de sortie est filtré par un condensateur 35. L'ensemble du circuit bouclé ainsi réalisé constitue un redresseur sans seuil unidirectionnel.

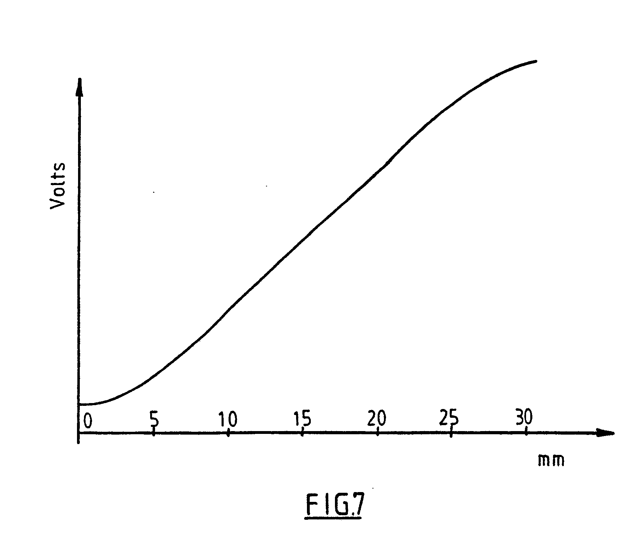

On obtient ainsi à la sortie, aux bornes du condensateur 35 une tension continue dont la valeur est proportionnelle à l'enfoncement du noyau 10 ou 10' dans l'enroulement secondaire 8 ou 8' (voir Figure 7)

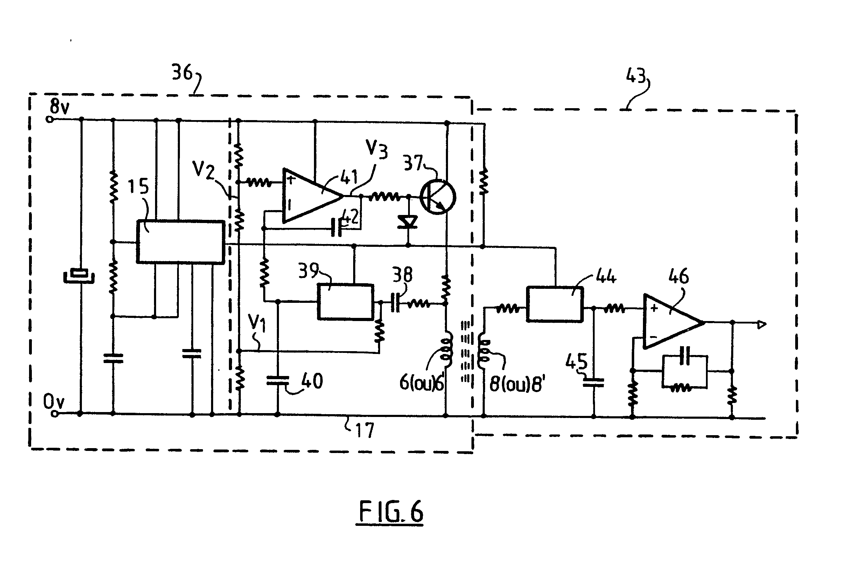

Dans la variante bidirectionnelle autorégulée représentée à la Figure 6, le circuit d'interface comporte:

I. Un système d'alimentation 36 du primaire en signaux de tension régulée comprenant:

a) Un générateur de signaux carrés 15

b) Un transistor ballast d'alimentation 37 traversé par le courant primaire, dont la valeur rendue périodiquement variable reste toujours supérieure à zéro, de façon à éviter l'apparition d'oscillations caractéristiques du fonctionnement du transformateur en régime libre.

Le transistor 37 est commandé conjointement d'une part par le générateur de signaux carrés 15, d'autre part, par un circuit d'asservissement comprenant:

1) Un circuit de prélèvement de la composante alternative de la tension primaire à réguler transmise par la capacité 38, polarisée par une tension auxiliaire $V_1$; ce circuit comporte un interrupteur bidirectionnel CMOS 39 échantillonnant la tension auxiliaire stabilisée $V_1$ et commandé en synchronisme avec le primaire. La tension auxiliaire $V_1$ est mémorisée par une capacité 40 sous la forme d'une tension continue proportionnelle à la valeur moyenne $V_p$ de l'alternance positive de la tension primaire augmentée de la tension de polarisation auxiliaire $V_1$.

2) Un circuit de comparaison et d'amplification constitué essentiellement par un amplificateur différentiel 41 qui reçoit, sur son entrée inverseuse, la tension continue mémorisée par le condensateur 40 et, sur son entrée non inverseuse, une tension de référence stabilisée $V_2$, de valeur prédéterminée, servant de comparaison.

Un condensateur de filtrage 42 peut être monté entre l'entrée inverseuse et la sortie de l'amplificateur 41 dont la tension $V_3$ est proportionnelle à $V_2 - (V_1 + V_p)$ soit $V_3 = K. [(V_2 - V_1) - V_p]$.

Cette tension de contre-réaction amplifie donc l'écart entre la valeur de consigne $V_2 - V_1$ et la tension à réguler $V_p$.

II. Un système de redressement sans seuil 43 par commutation bidirectionnelle, comportant essentiellement:

- Un interrupteur bidirectionnel 44 par exemple de technologie CMOS, dont l'électrode de commande est actionnée en synchronisme avec l'alternance positive de la tension primaire.

- Un condensateur mémoire 45 connecté entre la sortie de l'interrupteur 44 et la ligne de masse 17, et qui transforme en tension continue la tension pulsée délivrée par l'interrupteur 44.

- Un amplificateur opérationnel 46 pouvant être monotension, qui travaille en amplificateur continu et en adaptateur d'impédance; cet amplificateur lit la tension du condensateur 45 et délivre entre sa borne de sortie et la masse un signal continu de valeur proportionnelle à l'enfoncement du noyau du capteur dans l'enroulement du secondaire 8 ou 8'.

Cette deuxième configuration présente les avantages suivants:

I. En ce qui concerne la partie alimentation pulsée autorégulée

a) Suppression des inconvénients du dispositif de "roue libre", le "transistor" 37 restant en conduction, le courant de décharge de l'inductance du primaire se soustrait de la composante continue de ce courant lors de l'alternance négative de la tension primaire.

b) Elimination des erreurs dues à l'échauffement du capteur, grace au système de régulation basé sur l'intégration des alternances positives prélevées en synchronisme avec l'alimentation primaire et le même mode de prélèvement utilisé pour la mesure du signal secondaire. Ainsi sont éliminées les dérives dues aux variations de composantes et notamment celles dues à l'échauffement du bobinage primaire.

II. En ce qui concerne le redresseur à interrupteur bidirectionnel

a) Temps de réponse très réduit, notamment dans les phases de décroissance rapide du capteur, le condensateur mémoire 45 pouvant se décharger à travers l'interrupteur 44 lors de sa conduction.

b) L'amplificateur opérationnel 46 reçoit à l'entrée un signal continu positif. Sa bande passante n'est pas critique et il peut être avantageusement du type monotension.

c) Le signal de sortie correspond à la valeur moyenne de l'alternance positive du signal secondaire dans la phase de conduction, ce qui augmente l'immunité aux parasites.

d) Certains composants volumineux (condensateurs électro-chimiques) sont éliminés.

Le bobinage du capteur objet de l'invention ne comporte que deux enroulements et est donc économique. Il est fiable dans l'environnement automobile car il est protégé des poussières, des projections d'eau, d'huile et de carburant, et des interférences magnétiques. Il est également protégé des champs magnétiques externes et de l'effet des pièces ferro-magnétiques qui peuvent se trouver à proximité. Il peut effectuer sans inconvénients plusieurs centaines de millions de manoeuvres de faible amplitude.

**Revendications**

1. Capteur de déplacement inductif comportant un transformateur à couplage variable qui est alimenté en courant périodique et comporte deux enroulements dont un primaire (6 ou 6') et un secondaire (8 ou 8') disposés côte à côte et un noyau (10 ou 10') disposé dans ces enroulements, l'enroulement primaire (6 ou 6') ayant plusieurs couches et étant traversé en permanence par le noyau (10 ou 10'), un tube culasse (3) formant blindage enveloppant l'ensemble des deux bobinages, caractérisé en ce que l'enroulement primaire (6 ou 6') a une longueur inférieure au diamètre moyen de cet enroulement, en ce que l'enroulement secondaire ne comporte qu'une seule couche de spires et a une longueur au moins égale à la course possible du noyau, en ce que la tension d'alimentation de l'enroulement primaire a une forme approximativement rectangulaire et une fréquence supérieure à 10 kHz, en ce que l'enroulement primaire et l'enroulement secondaire sont connectés à un circuit d'interface comprenant des moyens pour élaborer un signal rectangulaire alimentant l'enroulement primaire et, pour redresser le signal prélevé sur l'enroulement secondaire, un interrupteur bidirectionnel (44), par exemple de technologie CMOS, dont la commande est effectuée en synchronisme avec l'alimentation de l'enroulement primaire (6), dont l'électrode d'entrée est reliée à l'enroulement secondaire du capteur éventuellement par l'intermédiaire d'un circuit de protection contre les tensions négatives, et dont l'électrode de sortie est reliée à un condensateur mémoire (45) dont la tension est lue par un amplificateur de courant continu à grande impédance d'entrée (46), et des moyens de régulation comprenant des moyens (39) de prélèvement de la composante alternative du signal de l'enroulement primaire, des moyens de mémorisation de cette composante par charge d'un condensateur (40) à une première tension continue ($V_1$) proportionnelle à ladite composante des moyens de comparaison (41) avec une deuxième tension continue de référence ($V_2$) et des moyens d'amplification de l'écart entre les deux tensions ($V_2$ et $V_1$) pour fournir une contre réaction efficace.

2. Capteur selon la revendication 1, caractérisé en ce que l'ensemble formé par les enroulements, le noyau et la culasse est enfermé dans un fourreau (1) en, matière plastique.

3. Capteur selon l'une des revendications précédentes, caractérisé en ce que la longueur du noyau (10 ou 10') est au moins égale à la somme des longueurs de l'enroulement primaire (6 ou 6') et de l'enroulement secondaire (8 ou 8').

4. Capteur selon l'une des revendications 1 à 3, caractérisé en ce que les moyens d'alimentation de l'enroulement primaire (6) comportent un transistor ballast (37) dont le courant ne s'annule pas lors du fonctionnement.

5. Capteur selon l'une des revendications 1 à 4, caractérisé en ce que les moyens de régulation sont agencés pour asservir à une valeur de consigne prédéterminée l'alternance positive ou les deux alternances de la composante alternative de la tension primaire.

6. Capteur selon l'une des revendications 1 à 5, caractérisé en ce que les moyens de prélèvement de la composante alternative du signal primaire sont essentiellement constitués par un interrupteur bidirectionnel (39), par exemple du type CMO5, commandé en synchronisme avec l'alternance positive de ladite composante alternative, dont l'électrode d'entrée est reliée d'une part au primaire (6) de l'enroulement du capteur, à travers un circuit comportant au moins un condensateur (38) monté en série, d'autre part à une borne portée à ladite première tension continue proportionelle ($V_1$), étant positive et servant de référence auxiliaire, de valeur suffisante pour interdire tout fonctionnement dans une plage négative, et dont l'électrode de sortie est reliée d'une part au condensateur de mémorisation (40), d'autre part à l'entrée inverseuse d'un amplificateur différentiel (41) qui constitue lesdits moyens de comparai son et dont l'entrée non inverseuse est connectée à la deuxième tension de référence ($V_2$) supérieure à la référence auxiliaire précitée ($V_1$) de la valeur de consigne choisie pour la valeur moyenne de l'alternance positive de la composante alternative de la tension primaire du capteur, les deux tensions de référence ($V_1$, $v_2$) pouvant être prélevées en deux points différents d'un même diviseur de tension alimentés sous tension régulée.

7. Capteur selon l'une des revendications précédentes, caractérisé en ce que les moyens de mesure du signal secondaire et les moyens de régulation de la tension primaire utilisent des interrupteurs de prélèvement identiques (39 et 44) fonctionnant simultanément et en synchronisme avec l'alimentation du primaire (6) pour charger chacun un condensateur (40 ou 45) de mémorisation de la tension échantillonnée correspondante.

**Patentansprüche**

1. Induktiver Verschiebungssensor mit einem Transformator mit variabler Kopplung, der mit einem periodischen Strom gespeist wird und zwei Nicklungen aufweist, die als Primärwicklung (6 oder 6') und Sekundärwicklung (8 oder 8') nebeneinander angeordnet sind, sowie einen Kern (10 oder 10'), der in diesen Wicklungen angeordnet ist, wobei die Primärwicklung (6 oder 6') mehrere Lagen aufweist und ständig vom Kern (10 oder 10') durchsetzt ist, und ein als Rohr ausgebildetes Joch (3), das eine die aus den beiden Spulenwicklungen bestehende Einheit umhüllende Abschirmung bildet, dadurch gekennzeichnet, daß die Primärwicklung (6 oder 6') eine Länge besitzt, die kleiner ist als der mittlere Durchmesser dieser Wicklung, daß die Sekundärwicklung nur eine einzige Lage von Windungen besitzt und eine Länge aufweist, die mindestens gleich dem möglichen Verschiebungsweg des Kerns ist, daß die Speisespannung der Primärwicklung angenähert rechteckige Form und eine Frequenz oberhalb von 10 kHz aufweist, daß die Primärwicklung und die Sekundärwicklung mit einem Interface-Kreis verbunden sind, der Mittel zur Verarbeitung eines die Primärwicklung speisenden Rechtecksignals aufweist und zum Gleichrichten des an der Sekundärwicklung abgenommenen Signals, einen bidirektionalen Unterbrecher (44), beispielsweise in CMOS-Technologie, dessen Steuerung synchron mit der Speisung der Primärwicklung (6) erfolgt, dessen Eingangselektrode mit der Sekundärwicklung des Sensors, gegebenenfalls unter Zwischenschaltung eines Schutzkreises gegen die negativen Spannungen, verbunden ist und dessen Ausgangselektrode mit einem Speicherkondensator (45) verbunden ist, dessen Spannung durch einen Gleichstromverstärker (46) mit hoher Eingangsimpedanz abgetastet wird, und Mittel zur Regelung, welche Mittel (39) zur Abnahme der Wechselstromkomponente des Signals der Primärwicklung aufweisen, sowie Mittel zum Speichern dieser Komponente durch Aufladen eines Kondensators (40) auf eine erste zu besagter Komponente proportionale Gleichspannung ($V_1$) und Mittel (41) zu ihrem Vergleich mit einer zweiten Referenz-Gleichspannung ($V_2$) und Mittel zur Verstärkung der Abweichung zwischen den beiden Spannungen ($V_2$ und $V_1$) zur Erzeugung einer

wirksamen Gegenreaktion.

2. Sensor nach Anspruch 1, dadurch gekennzeichnet, daß die durch die Wicklungen, den Kern und das Joch gebildete Baueinheit in eine Hülse (1) aus Kunststoffmaterial eingeschlossen ist.

3. Sensor nach einem der vorhergehenden Ansprüche, dadurch gekennzeichnet, daß die Länge des Kerns (10 oder 10') mindestens gleich der Summe aus den Längen der Primärwicklung (6 oder 6') und der Sekundärwicklung (8 oder 8') ist.

4. Sensor nach einem der Ansprüche 1 bis 3, dadurch gekennzeichnet, daß die Mittel zur Stromversorgung der Primärwicklung (6) einen Ballasttransistor (37) aufweisen, dessen Strom während des Betriebs nicht verschwindet

5. Sensor nach einem der Ansprüche 1 bis 4, dadurch gekennzeichnet, daß die Mittel zur Regelung so angesteuert sind, daß sie die positive Halbwelle oder die beiden Halbwellen der Wechselkomponente der Primärspannung auf einen vorgegebenen Sollwert steuern.

6. Sensor nach einem der Ansprüche 1 bis 5, dadurch gekennzeichnet, daß die Mittel zur Abnahme der Wechselstromkomponente des Primärsignals im wesentlichen durch einen bidirektionalen Unterbrecher (39), beispielsweise vom CMOS-Typ, gebildet werden, der synchron mit der positiven Halbwelle besagter Wechselkomponente angesteuert wird und dessen Eingangselektrode einerseits mit der Primärwicklung (6) des Sensors über einen Schaltkreis verbunden ist, der mindestens einen in Serie geschalteten Kondensator (38) aufweist, und andererseits mit einer Anschlußklemme, die auf der besagten ersten proportionalen Gleichspannung $(V_1)$ gehalten wird, welche positiv ist und als Hilfsreferenz dient mit einem Wert, der zur Verhinderung jeder Funktion im negativen Spannungsbereich ausreicht und dessen Ausgangselektrode einerseits mit dem Speicherkondensator (40) verbunden ist und andererseits mit dem invertierten Eingang eines Differentialverstärkers (41), welcher die besagten Mittel zum Vergleich bildet und dessen nicht invertierter Eingang mit der zweiten Referenzspannung $(V_2)$ oberhalb der oben erwähnten Hilfsreferenz $(V_1)$ für den Sollwert verbunden ist, der für den Mittelwert der positiven Halbwelle der Wechselkomponente der Primärspannung des Sensors ausgewählt ist, wobei die beiden Referenzspannungen $(V_1, V_2)$ an zwei verschiedenen Punkten des gleichen Spannungsteilers abgegriffen werden können, die unter geregelter Versorgungsspannung stehen.

7. Sensor nach einem der vorhergehenden Ansprüche, dadurch gekennzeichnet, daß die Mittel zum Messen des Sekundär-Signals und die Mittel zur Regelung der Primär-Spannung identische Abnahme-Unterbrecher (39 und 44) verwenden, die gleichzeitig und synchron mit der Speisespannung der Primärwicklung (6) arbeiten, um jeweils einen Speicherkondensator (40 oder 45) auf die entsprechende geeichte Spannung aufzuladen.

## Claims

1. Inductive displacement transducer comprising a variable coupling transformer which is fed with periodic current and comprises two windings, a primary winding (6 or 6') and a secondary winding (8 or 8'), disposed side by side and a core (10 or 10') disposed in these windings, the primary winding (6 or 6') having several layers and having the core (10 or 10') permanently therethrough, a yoke tube (3) forming a screen enveloping the assembly of the two windings, characterized in that the primary winding (6 or 6') has a length less than the mean diameter of the winding, in that the secondary winding only comprises a single layer of turns and has a length at least equal to the possible stroke of the core, in that the supply voltage for the primary winding has an approximately rectangular shape and a frequency higher than 10 kHz, in that the primary winding and the secondary winding are connected to an interface circuit comprising means for providing a rectangular signal feeding the primary winding and, to rectify the signal taken from the secondary winding, a bidirectional switch (44), e.g. of the CMOS technology, which is controlled in synchronism with the feeding of the primary winding (6), whose input electrode is connected to the secondary of the transducer possibly through a circuit protecting against negative voltages, and whose output electrode is connected to a storage capacitor (45) whose voltage is read by a DC amplifier with high input impedance (46), and regulation means comprising means (39) for taking the AC component from the primary winding signal, means for storing this component by charging a capacitor (40) to a first DC voltage $(V_1)$ proportional to said component, means (41) for comparing with a second DC reference voltage $(V_2)$ and means for amplifying the difference between the two voltages $(V_2$ and $V_1)$ so as to provide an efficient feedback.

2. Transducer according to claim 1, characterized in that the assembly formed by the windings, the core and the yoke is enclosed in a plastic material sleeve (1).

3. Transducer according to one of the preceding claims, characterized in that the length of the core (10 or 10') is at least equal to the sum of the lengths of the primary winding (6 or 6') and of the secondary winding (8 or 8').

4. Transducer according to one of claims 1 to 3, characterized in that the supply means for the primary winding (6) comprise a ballast transistor (37) whose current is not cancelled out during operation.

5. Transducer according to one of claims 1 to 4, characterized in that the regulation means are adapted so as to make the positive half-wave or the two half-waves of the AC component of the primary voltage dependent on a predetermined reference value.

6. Transducer according to one of claims 1 to 5, characterized in that the means for taking the AC component from the primary signal are essentially formed by a bidirectional switch (39), for example of CMOS type, controlled in synchronism with the positive half-wave of said AC component, whose input electrode is connected to the primary (6) of the winding of the transducer, through a circuit comprising at least one series connected capacitor (38) and to a terminal brought to said first proportional DC voltage $(V_1)$, being positive and serving as auxiliary reference, of a sufficient value to prevent any operation in a negative range, and whose output electrode is connected both to the storage capacitor (40), and to the inverting input of the differential amplifier (41) which forms said comparison means and whose non inverting input is connected to the second reference voltage $(V_2)$ greater than said auxiliary reference voltage $(V_1)$ by the reference value chosen for the mean value of the positive half-wave of the AC component of the primary voltage of the transducer, the two reference voltages $(V_1, V_2)$ being possibly taken from two different points of the same voltage divider under a regulated voltage.

7. Transducer according to one of the preceding claims, characterized in that the means for measuring the secondary signal and the means for regulating the primary voltage use identical sampling switches (39 and 44) operating simultaneously and in synchronism with the supply for the primary (6) so as to each charge a storage capacitor (40 or 45) with the corresponding sampled voltage.

FIG. 2

FIG.1

FIG.4

FIG.3

FIG.5

F IG.6

EP 0 174 227 B1

FIG.7